(19) Europäisches Patentamt / European Patent Office / Office européen des brevets

(11) **EP 4 550 462 A1**

(12) **EUROPEAN PATENT APPLICATION**
published in accordance with Art. 153(4) EPC

(43) Date of publication:
07.05.2025 Bulletin 2025/19

(21) Application number: 23831124.5

(22) Date of filing: 15.06.2023

(51) International Patent Classification (IPC):
$H01M\ 4/525$ (2010.01)  $C01G\ 53/00$ (2025.01)
$H01M\ 4/505$ (2010.01)

(52) Cooperative Patent Classification (CPC):
C01G 53/00; H01M 4/505; H01M 4/525;
Y02E 60/10

(86) International application number:
PCT/JP2023/022227

(87) International publication number:
WO 2024/004676 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.06.2022 JP 2022104807

(71) Applicant: Panasonic Intellectual Property
Management Co., Ltd.
Kadoma-shi, Osaka 571-0057 (JP)

(72) Inventors:
• TOGO, Masakazu
Kadoma-shi, Osaka 571-0057 (JP)
• INOUE, Katsuya
Kadoma-shi, Osaka 571-0057 (JP)
• OGASAWARA, Takeshi
Kadoma-shi, Osaka 571-0057 (JP)

(74) Representative: Novagraaf International SA
Chemin de l'Echo 3
1213 Onex, Geneva (CH)

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57) The present invention provides a positive electrode active material which improves the storage characteristics of a nonaqueous electrolyte secondary battery. This positive electrode active material, which is contained in a nonaqueous electrolyte secondary battery, contains a lithium transition metal composite oxide; and the lithium transition metal composite oxide contains Ni, Ca and Sr, and comprises secondary particles, each of which is composed of aggregated primary particles. With respect to the distribution of element concentrations in a cross-section of the lithium transition metal composite oxide as determined using time-of-flight secondary ion mass spectrometry, at least one of the ratio $I_{Ca\_OUT}/I_{Ca\_IN}$ of the normalized intensity $I_{Ca\_OUT}$ of Ca in the surfaces of the secondary particles to the normalized intensity $I_{Ca\_IN}$ of Ca in the insides of the secondary particles and the ratio $I_{Sr\_OUT}/I_{Sr\_IN}$ of the normalized intensity $I_{Sr\_OUT}$ of Sr in the surfaces of the secondary particles to the normalized intensity $I_{Sr\_IN}$ of Sr in the insides of the secondary particles is 7 to 20.

Figure 1

**Description**

TECHNICAL FIELD

The present disclosure relates to a positive electrode active material for non-aqueous electrolyte secondary battery and a non-aqueous electrolyte secondary battery.

BACKGROUND

Lithium nickel oxide ($LiNiO_2$) has been conventionally known to have a high energy density, and by substituting part of Ni atoms with Co, Al, Mn, and the like, it is possible to improve battery characteristics such as reliability.
Patent Literature 1 discloses a technique of improving the charge-discharge cycle characteristic and safety of a secondary battery by using a positive electrode active material obtained by dissolving Sr in solid solution form in a predetermined ratio in an NCM-based lithium transition metal composite oxide containing Ni, Co, and Mn.

CITATION LIST

PATENT LITERATURE

PATENT LITERATURE 1: Japanese Patent Registration No. 6226430

SUMMARY

A lithium transition metal composite oxide with a Ni content of greater than or equal to 80 % tends to cause side reactions with a non-aqueous electrolyte, which may result in deterioration of characteristics of a non-aqueous electrolyte secondary battery after long-term storage. In particular, when a battery has been kept at high temperatures, a decrease in battery capacity may present a problem. In the technique described in Patent Literature 1, no consideration has been made regarding improving battery characteristics when using a lithium transition metal composite oxide with a high Ni content, and there is still room for improvement.
An object of the present disclosure is to provide a positive electrode active material which enables to improve the storage characteristic of a non-aqueous electrolyte secondary battery.
A positive electrode active material for non-aqueous electrolyte secondary battery according to one aspect of the present disclosure includes a lithium transition metal composite oxide. The lithium transition metal composite oxide contains Ni, Ca, and Sr, and includes secondary particles formed by aggregation of primary particles. In an element concentration distribution in a cross section of the lithium transition metal composite oxide as determined using time-of-flight secondary ion mass spectrometry, at least one of a ratio $I_{Ca\_OUT}/I_{Ca\_IN}$ of a normalized intensity $I_{Ca\_OUT}$ of Ca at a surface of the secondary particles to a normalized intensity $I_{Ca\_IN}$ of Ca in an interior of the secondary particles and a ratio $I_{Sr\_OUT}/I_{Sr\_IN}$ of a normalized intensity $I_{Sr\_OUT}$ of Sr at the surface of the secondary particles to a normalized intensity $I_{Sr\_IN}$ of Sr in the interior of the secondary particles is greater than or equal to 7 and less than or equal to 20.
A non-aqueous electrolyte secondary battery according to one aspect of the present disclosure includes a positive electrode containing the above-described positive electrode active material for non-aqueous electrolyte secondary battery, a negative electrode, and a non-aqueous electrolyte.
According to the positive electrode active material for non-aqueous electrolyte secondary battery according to one aspect of the present disclosure, the storage characteristic of the non-aqueous electrolyte secondary battery can be improved.

BRIEF DESCRIPTION OF DRAWINGS

FIG. 1 is a longitudinal cross-sectional view of a non-aqueous electrolyte secondary battery according to an example embodiment.
FIG. 2 is a diagram schematically showing a cross section of a secondary particle of a lithium transition metal composite oxide.

DESCRIPTION OF EMBODIMENTS

A layered structure of a lithium transition metal composite oxide includes a transition metal layer, a Li layer, and an oxygen layer, and battery charge-discharge reaction proceeds as Li ions present in the Li layer reversibly move in and out. A lithium transition metal composite oxide containing Ni as the main component is generally known as a high-capacity positive electrode active material. However, a lithium transition metal composite oxide with a Ni content of greater than or equal to 80 % tends to cause side reactions with a non-aqueous electrolyte. For this reason, battery capacity may decrease after long-term storage, and there is a problem in storage characteristic.

Patent Literature 1 discloses a technique of improving the charge-discharge cycle characteristic and safety of a secondary battery by using a positive electrode active material obtained by dissolving Sr in solid solution form in a predetermined ratio in an NCM-based lithium transition metal composite oxide containing Ni, Co, and Mn. However, in Patent Literature 1, no consideration has been made regarding improving battery characteristics when using a lithium transition metal composite oxide with a high Ni content, and there is still room for improvement.

As a result of conducting intensive studies to solve the above problem, the present inventors have found that the storage characteristic can be improved by using a lithium transition metal composite oxide in which Ca and Sr are present in a predetermined ratio at the surface and in the interior of secondary particles. It is presumed that a synergistic effect of Ca and Sr suppresses side reactions with the non-aqueous electrolyte during storage.

An example embodiment of a non-aqueous electrolyte secondary battery according to the present disclosure will now be described in detail. Although a cylindrical battery in which a spiral-type electrode assembly is housed in a cylindrical outer casing is described below as an example, the electrode assembly is not limited to being of a spiral type, and may be of a laminated type formed by alternately laminating a plurality of positive electrodes and a plurality of negative electrodes one by one via separators. Further, the outer casing is not limited to being cylindrical, and may be, for example, rectangular, coin-shaped, or the like, or may be a battery housing composed of a laminate sheet including a metal layer and a resin layer.

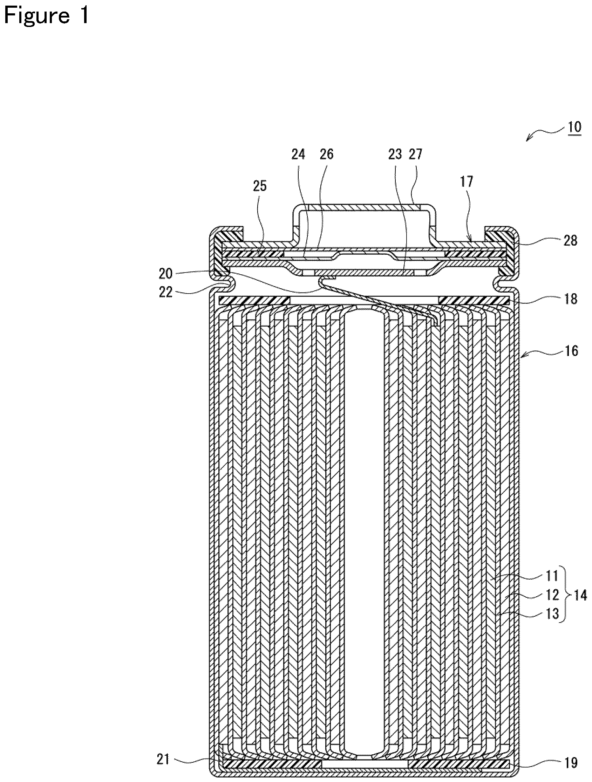

FIG. 1 is an axial cross-sectional view of a cylindrical secondary battery 10 according to an example embodiment. As shown in FIG. 1, the secondary battery 10 comprises a spiral-type electrode assembly 14, an electrolyte, and an outer casing 16 that houses the electrode assembly 14 and the electrolyte. The electrode assembly 14 includes a positive electrode 11, a negative electrode 12, and separators 13, and has a spiral structure formed by winding the positive electrode 11 and the negative electrode 12 in a spiral shape with the separators 13 interposed. The outer casing 16 is a bottomed cylindrical metal container having an opening at one axial end, and the opening of the outer casing 16 is closed by a sealing assembly 17. In the following description, for convenience of explanation, the side of the battery toward the sealing assembly 17 will be referred to as "upper", and the side toward the bottom portion of the outer casing 16 will be referred to as "lower".

The positive electrode 11, the negative electrode 12, and the separators 13, which constitute the electrode assembly 14, are all elongate rectangular members, and are alternately laminated in the radial direction of the electrode assembly 14 by being wound lengthwise in a spiral shape. The separators 13 isolate the positive electrode 11 and the negative electrode 12 from each other. The negative electrode 12 is formed to have a size slightly larger than that of the positive electrode 11 in order to prevent lithium deposition. That is, the negative electrode 12 is formed to be longer than the positive electrode 11 in the lengthwise direction and in the widthwise direction. The separators 13 provided as two sheets are formed to have a size slightly larger than at least the positive electrode 11, and are arranged, for example, to sandwich the positive electrode 11. The electrode assembly 14 has a positive electrode lead 20 connected to the positive electrode 11 by welding or the like, and a negative electrode lead 21 connected to the negative electrode 12 by welding or the like. In the electrode assembly 14, the lengthwise direction of the positive electrode 11 and the negative electrode 12 corresponds to the winding direction, and the widthwise direction of the positive electrode 11 and the negative electrode 12 corresponds to the axial direction. That is, the end faces, in the widthwise direction, of the positive electrode 11 and the negative electrode 12 form the axial end faces of the electrode assembly 14.

Above and below the electrode assembly 14, insulation plates 18, 19 are provided respectively. In the example shown in FIG. 1, the positive electrode lead 20 extends through a through hole in the insulation plate 18 and toward the sealing assembly 17, while the negative electrode lead 21 extends outside the insulation plate 19 and toward the bottom portion of the outer casing 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom portion of the outer casing 16, and the outer casing 16 serves as the negative electrode terminal.

A gasket 28 is provided between the outer casing 16 and the sealing assembly 17 to ensure airtightness inside the battery. The outer casing 16 has a grooved portion 22 formed thereon, where a part of a side surface portion projects inward, and which supports the sealing assembly 17. The grooved portion 22 is preferably formed in an annular shape along the circumferential direction of the outer casing 16, and supports the sealing assembly 17 on its upper surface. The sealing assembly 17 is fixed to an upper part of the outer casing 16 by means of the grooved portion 22 and an opening end of the outer casing 16 which is crimped to the sealing assembly 17.

The sealing assembly 17 has a structure obtained by laminating, in order from the electrode assembly 14 side, the internal terminal plate 23, a lower vent member 24, an insulation member 25, an upper vent member 26, and the cap 27. Each of the members constituting the sealing assembly 17 has, for example, a disk shape or a ring shape, and the respective members except the insulation member 25 are mutually electrically connected. The lower vent member 24 and the upper vent member 26 are connected to each other at their central portions, and the insulation member 25 is interposed between peripheral edge portions of these vent members. When the internal pressure of the battery increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

A detailed description will now be given regarding the positive electrode 11, the negative electrode 12, the separators 13, and the non-aqueous electrolyte, which constitute the secondary battery 10, and in particular regarding the positive electrode 11.

[Positive Electrode]

The positive electrode 11 comprises, for example, a positive electrode current collector and a positive electrode mixture layer formed on a surface of the positive electrode current collector. The positive electrode mixture layer is preferably formed on both sides of the positive electrode current collector. As the positive electrode current collector, it is possible to use a foil of a metal such as aluminum or an aluminum alloy which is stable in the potential range of the positive electrode 11, a film having such a metal disposed on its surface layer, or the like. The thickness of the positive electrode current collector is, for example, greater than or equal to 10 $\mu$m and less than or equal to 30 $\mu$m.

The positive electrode mixture layer contains, for example, a positive electrode active material, a conductive agent, and a binder. The thickness of the positive electrode mixture layer is, for example, greater than or equal to 10 $\mu$m and less than or equal to 150 $\mu$m on one side of the positive electrode current collector. The positive electrode 11 can be produced, for example, by applying a positive electrode mixture slurry containing the positive electrode active material, the conductive agent, and the like onto the surfaces of the positive electrode current collector, and, after drying the applied coating, rolling the coating to form positive electrode mixture layers on both sides of the positive electrode current collector.

Examples of the conductive agent contained in the positive electrode mixture layer include carbon-based particles such as carbon black (CB), acetylene black (AB), Ketjenblack, carbon nanotubes (CNT), graphene, and graphite. These may be used alone, or two or more types may be used in combination.

Examples of the binder contained in the positive electrode mixture layer include fluororesins such as polytetrafluoroethylene (PTFE) and polyvinylidene fluoride (PVDF), polyimide resins, acrylic resins, polyolefin resins, and polyacrylonitrile (PAN). A single type among these may be used alone, or two or more types may be used in combination.

The positive electrode active material contained in the positive electrode mixture layer includes a lithium transition metal composite oxide. The lithium transition metal composite oxide contains Ni, Ca, and Sr.

The content of Ni in the lithium transition metal composite oxide is greater than or equal to 80 mol% based on the total number of moles of metal elements other than Li. With this feature, battery capacity can be improved. The Ni content is preferably greater than or equal to 85 mol%, and more preferably greater than or equal to 90 mol%. From the perspective of structure stabilization, the Ni content is preferably less than or equal to 95 mol%.

The content of Ca in the lithium transition metal composite oxide is preferably greater than or equal to 0.01 mol% and less than or equal to 5 mol%, more preferably greater than or equal to 0.1 mol% and less than or equal to 4 mol%, and even more preferably greater than or equal to 0.2 mol% and less than or equal to 3 mol%, based on the total number of moles of metal elements other than Li.

The content of Sr in the lithium transition metal composite oxide is preferably greater than or equal to 0.01 mol% and less than or equal to 5 mol%, more preferably greater than or equal to 0.05 mol% and less than or equal to 3 mol%, and even more preferably greater than or equal to 0.08 mol% and less than or equal to 2 mol%, based on the total number of moles of metal elements other than Li.

The lithium transition metal composite oxide may further contain one or more elements selected from the group consisting of Co, Al, and Mn. The content of each of Co, Al, and Mn in the lithium transition metal composite oxide is, for example, greater than or equal to 0 mol% and less than or equal to 10 mol% based on the total number of moles of metal elements other than Li. Further, the total content of Co, Al, and Mn is, for example, greater than or equal to 0 mol% and less than or equal to 18 mol%.

The lithium transition metal composite oxide may further contain one or more elements selected from the group consisting of Nb, Ti, Zr, W, and Si. The content of each of Nb, Ti, Zr, W, and Si in the lithium transition metal composite oxide is, for example, greater than or equal to 0 mol% and less than or equal to 1 mol% based on the total number of moles of metal elements other than Li. Further, the total content of Nb, Ti, Zr, W, and Si is, for example, greater than or equal to 0 mol% and less than or equal to 2 mol%.

The lithium transition metal composite oxide is, for example, a composite oxide represented by general formula

$Li_aNi_xM1_yM2_zCa_sSr_tO_{2-b}$ (wherein $0.8 \leq a \leq 1.2$, $0.80 \leq x \leq 0.95$, $0 \leq y \leq 0.18$, $0 \leq z \leq 0.02$, $0.0001 \leq s \leq 0.05$, $0.0001 \leq t \leq 0.05$, $0 \leq b \leq 0.05$, $x+y+z+s+t = 1$, M1 is one or more elements selected from the group consisting of Co, Al, and Mn, and M2 is one or more elements selected from the group consisting of Nb, Ti, Zr, W, and Si). The ratio of the metal elements contained in the lithium transition metal composite oxide can be measured, for example, by an inductively coupled plasma atomic emission spectrometer (ICP-AES).

The lithium transition metal composite oxide includes secondary particles formed by aggregation of primary particles. The particle size of the primary particles is, for example, greater than or equal to 0.02 $\mu$m and less than or equal to 2 $\mu$m. The particle size of the primary particles is measured as a diameter of a circle circumscribing a particle image observed by a scanning electron microscope (SEM). The average particle size of the secondary particles is, for example, greater than or equal to 2 $\mu$m and less than or equal to 30 $\mu$m. Here, the average particle size means the volume-based median diameter (D50). D50 means a particle size at which, in a volume-based particle size distribution, the cumulative frequency from the smaller particle size side reaches 50 %, and is also called the mid-level diameter. The particle size distribution of the secondary particles can be measured with a laser diffraction particle size distribution measuring device (e.g., MT3000II manufactured by MicrotracBEL Corp.) using water as the dispersion medium.

Ca and Sr are present at the surface of the secondary particles and in the interior of the secondary particles. In the interior of the secondary particles, Ca and Sr are present, for example, at the surfaces of the primary particles, and are not dissolved in solid solution form in the interior of the primary particles. With this feature, suppression of side reactions between the non-aqueous electrolyte and the lithium transition metal composite oxide becomes notable. At the surface and in the interior of the secondary particles, Ca may be present as a compound containing Ca. Examples of the compound containing Ca include CaO and $CaCO_3$. At the surface and in the interior of the secondary particles, Sr may be present as a compound containing Sr. Examples of the compound containing Sr include SrO and $SrCO_3$. Presence of Ca and Sr at the surface and in the interior of the secondary particles can be confirmed by, for example, energy dispersive X-ray spectroscopy (TEM-EDX), in addition to time-of-flight secondary ion mass spectrometry which will be described later.

In the element concentration distribution in a cross section of the lithium transition metal composite oxide as determined using time-of-flight secondary ion mass spectrometry (TOF-SIMS), at least one of a ratio $I_{Ca\_OUT}/I_{Ca\_IN}$ of a normalized intensity $I_{Ca\_OUT}$ of Ca at the surface of the secondary particles to a normalized intensity $I_{Ca\_IN}$ of Ca in the interior of the secondary particles and a ratio $I_{Sr\_OUT}/I_{Sr\_IN}$ of a normalized intensity $I_{Sr\_OUT}$ of Sr at the surface of the secondary particles to a normalized intensity $I_{Sr\_IN}$ of Sr in the interior of the secondary particles is greater than or equal to 7 and less than or equal to 20 (hereinafter, $I_{Ca\_OUT}/I_{Ca\_IN}$ will be referred to as the normalized intensity ratio of Ca, and $I_{Sr\_OUT}/I_{Sr\_IN}$ will be referred to as the normalized intensity ratio of Sr). With this feature, the storage characteristic of the non-aqueous electrolyte secondary battery is improved. If both of the normalized intensity ratios of Ca and Sr are not within the range from 7 to 20, the storage characteristic is not sufficiently improved.

The normalized intensity ratios of Ca and Sr are obtained by performing measurement using a time-of-flight secondary ion mass spectrometer (TOF-SIMS5 manufactured by IONTOF GmbH) under the following conditions.

Primary ion: $Bi^{3+}$
Ion voltage: 30 kV
Ion current: 0.03 pA @ 100 us
Observation range: 50 $\mu$m $\times$ 50 $\mu$m
Mass range: 60 us (up to 310 amu)
Detection: 4 frames/scan; 150 scans

An image obtained by the above measurement, which shows the concentration distribution of Ni, Ca, and Sr, is divided into 256$\times$256 pixels, and for each pixel, detection intensities of Ni, Ca, and Sr are respectively calculated. Further, a ratio of the detection intensity of Ca to the detection intensity of Ni is calculated as the normalized Ca intensity $I_{Ca}$, and the ratio of the detection intensity of Sr to the detection intensity of Ni is calculated as the normalized Sr intensity $I_{Sr}$.

An area from the outer face of the secondary particles to 0.5 $\mu$m toward the inside as recognized in the above image is determined as the surface of the secondary particles, and pixels included in this surface of the secondary particles (hereinafter referred to as the surface pixels) are identified. A set of $I_{Ca}$ values corresponding to the respective surface pixels is used as $I_{Ca\_OUT}$, and a set of $I_{Sr}$ values corresponding to the respective surface pixels is used as $I_{Sr\_OUT}$. Further, an area toward the inside from the secondary particle surface defined above is determined as the interior of the secondary particles, and pixels included in this interior of the secondary particles (hereinafter referred to as the interior pixels) are identified. A set of $I_{Ca}$ values corresponding to the respective interior pixels is used as $I_{Ca\_IN}$, and a set of $I_{Sr}$ values corresponding to the respective surface pixels is used as $I_{Sr\_IN}$. Based on the thus obtained normalized intensities of Ca and Sr at the surface and in the interior of the secondary particles, the normalized intensity ratio of Ca ($I_{Ca\_OUT}/I_{Ca\_IN}$) and the normalized intensity ratio of Sr ($I_{Sr\_OUT}/I_{Sr\_IN}$) are calculated. A sample used for the cross-sectional observation may be a sample obtained by embedding the lithium transition metal composite oxide in a resin or the like, or may be a positive electrode mixture layer containing the lithium transition metal composite oxide.

The lithium transition metal composite oxide may have a layered structure. Examples of the layered structure of the lithium transition metal composite oxide include a layered structure belonging to the space group R-3m, and a layered structure belonging to the space group C2/m. From the perspective of achieving high capacity and stability of crystal structure, the lithium transition metal composite oxide preferably has a layered structure belonging to the space group R-3m. The layered structure of the lithium transition metal composite oxide may include a transition metal layer, a Li layer, and an oxygen layer.

In the layered structure of the lithium transition metal composite oxide, the ratio of metal elements other than Li present in the Li layer is less than or equal to 8 mol% based on the total number of moles of metal elements other than Li in the lithium transition metal composite oxide. If the ratio of metal elements other than Li in the Li layer exceeds 8 mol%, diffusivity of Li ions in the Li layer decreases, which may result in a decrease in battery capacity. While the main metal element other than Li present in the Li layer is Ni, other metal elements may be included. The ratio of metal elements other than Li in the Li layer is, for example, greater than or equal to 0.1 mol%.

The ratio of metal elements other than Li present in the Li layer of the layered structure can be obtained from results of a Rietveld analysis of an X-ray diffraction pattern obtained by X-ray diffraction measurement of the lithium transition metal composite oxide. For the Rietveld analysis of the X-ray diffraction pattern, for example, the Rietveld analysis software PDXL2 (Rigaku Corporation) can be used.

The X-ray diffraction pattern is obtained by powder X-ray diffractometry using a powder X-ray diffractometer (manufactured by Rigaku Corporation, product name "RINT-TTR", using Cu-K$\alpha$ radiation source) under the following conditions.

Measurement range: 15 to 120 °
Scan speed: 4 °/min
Analysis range: 30 to 120 °
Background: B-spline
Profile function: Split pseudo-Voigt function
Constraint conditions: Li(3a) + Ni(3a) = 1
Ni(3a) + Ni(3b) = $\alpha$ ($\alpha$ is the Ni content ratio in each case)
ICSD No.: 98-009-4814

The lithium transition metal composite oxide may have voids inside the secondary particles. The voids inside the secondary particles are present, for example, between the primary particles. The porosity of the lithium transition metal composite oxide is preferably less than or equal to 5 %. With this feature, the storage characteristic of the non-aqueous electrolyte secondary battery can be further improved. It is presumed that by setting the porosity of the lithium transition metal composite oxide to less than or equal to 5 %, changes in the crystal structure are less likely to be induced, and thus the storage characteristic is improved. The porosity of the lithium transition metal composite oxide is preferably greater than or equal to 0.1 %, and more preferably greater than or equal to 0.5 %. With this feature, the amount of Li released from the lithium transition metal composite oxide is increased, so that the battery capacity is improved.

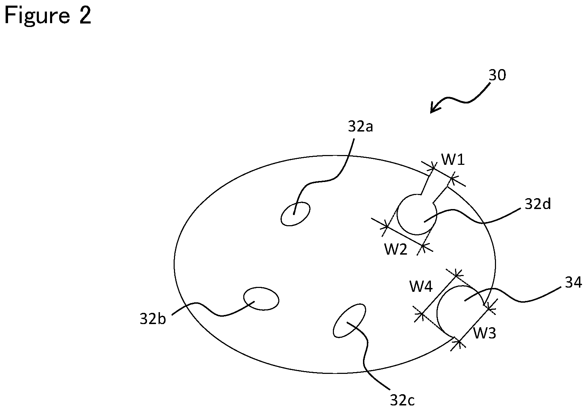

The voids inside the lithium transition metal composite oxide will be described by reference to FIG.2. FIG. 2 is a diagram schematically showing a cross section of a secondary particle 30 of the lithium transition metal composite oxide. The secondary particle 30 has therein voids 32a, 32b, 32c, and 32d. The voids 32a, 32b, and 32c are not connected to the outside of the secondary particle 30, and are present in a closed state inside the secondary particle 30. The void 32d is connected to the outside at the outer edge of the secondary particle 30, but the width W1 at the outer edge of the secondary particle 30 and the maximum width W2 of the void 32d in a direction parallel to the width W1 satisfy the relationship W1/W2 $\leq$ 0.9. Here, a dent 34 is not a void because the dent is 34 connected to the outside at the outer edge of the secondary particle 30, and the relationship between the width W3 at the outer edge of the secondary particle 30 and the maximum width W4 of the dent 34 in a direction parallel to the width W3 is W3/W4 > 0.9. In this way, in the present specification, the term "void" refers to either a void that is present in a closed state inside a secondary particle 30, or a void that is connected to the outside at the outer edge of a secondary particle 30 and whose width $W_O$ at the outer edge of the secondary particle 30 and the maximum width $W_m$ of the void in a direction parallel to the width $W_O$ satisfy the relationship $W_O/W_m \leq 0.9$.

The porosity of the lithium transition metal composite oxide can be calculated by performing the following procedure.

(1) Cause a cross section of a secondary particle 30 to be exposed. As a method for exposing a cross section, for example, there may be used a method in which a secondary particle 30 is embedded in a resin, and the obtained product is machined with an ion milling device (e.g., IM4000PLUS manufactured by Hitachi High-Tech Corporation) to expose a cross section of the secondary particle 30.

(2) Using a scanning electron microscope (SEM), obtain a backscattered electron image of the exposed cross section of the secondary particle 30.

(3) Load the cross-sectional image obtained as described above into a computer, and perform binarization thereon using an image analysis software (e.g., ImageJ manufactured by the US National Institutes of Health) to obtain a binarized image in which voids present in the particle cross section are converted to white color, and an area enclosed by the outer edge of the secondary particle 30, excluding the voids, is converted to black color. At that time, make corrections to distinguish between a void 32d and a dent 34 such as those shown in FIG. 2.

(4) From the binarized image, measure the area of the voids and the area of the secondary particle cross section (i.e., the sum of the white and black areas). The porosity can be calculated based on the following formula:

$$\text{Porosity} = \text{Area of voids} / \text{Area of cross section of secondary particle} \times 100$$

(5) Perform the above measurement for 10 secondary particles 30 contained in the same lithium transition metal composite oxide, and use an average of the porosity values calculated respectively for the 10 secondary particles as the porosity of the lithium transition metal composite oxide.

The positive electrode mixture layer may contain other positive electrode active materials in addition to the above-described positive electrode active material of the present embodiment. Such other positive electrode active materials include, for example, a lithium transition metal composite oxide which contains Ni, Ca, and Sr, and in which both of the normalized intensities of Ca and Sr are not in the range from 7 to 20.

Next, an example method for producing the positive electrode active material according to the present embodiment will be described. For example, the method for producing the positive electrode active material comprises a step of mixing together a metal oxide containing at least Ni, a Li raw material, a Ca raw material, and a Sr raw material to obtain a mixture, and a step of firing the mixture to obtain the positive electrode active material.

The metal oxide containing at least Ni can be produced by adding dropwise an alkaline solution of sodium hydroxide or the like to a solution of a metal salt containing Ni, Co, Al, Mn, and the like while stirring so as to adjust the pH to the alkaline side (e.g., higher than or equal to 8.5 and lower than or equal to 12.5), thereby causing a composite hydroxide to be precipitated (or co-precipitated), and then heat-treating this metal hydroxide. The firing temperature is not subjected to any particular limitation, but is, for example, in the range from 300 °C to 600 °C.

Next, the metal oxide containing at least Ni, a Li raw material, a Ca raw material, and a Sr raw material are mixed, and a mixture is thereby obtained. Examples of the Li raw material include $Li_2CO_3$, $LiOH$, $Li_2O_2$, $Li_2O$, $LiNO_3$, $LiNO_2$, $Li_2SO_4$, $LiOH \cdot H_2O$, $LiH$, and $LiF$. Examples of the Ca raw material include $Ca(OH)_2$, $CaHPO_4$, $Ca(H_2PO_4)_2$, $Ca_3(PO_4)_2$, $CaO$, $CaCO_3$, $CaSO_4$, $Ca(NO_3)_2$, $CaCl_2$, and $CaAlO_4$. Examples of the Sr raw material include $Sr(OH)_2$, $SrHPO_4$, $Sr(H_2PO_4)_2$, $Sr_3(PO_4)_2$, $SrO$, $SrCO_3$, $SrSO_4$, $Sr(NO_3)_2$, $SrCl_2$, and $SrAlO_4$. During the mixing, a Me raw material may be mixed in. Examples of the Me raw material include $Nb_2O_5$, $TiO_2$, $ZrO_2$, $WO_3$, and $SiO_2$.

By firing the above mixture, a lithium transition metal composite oxide that serves as the positive electrode active material can be obtained. The mixture is, for example, fired in an oxygen atmosphere. The firing conditions are such that a first heating rate at temperatures higher than or equal to 300 °C and lower than or equal to 680 °C is more than 1.0 °C/min and less than or equal to 4.5 °C/min, and the maximum temperature reached is in the range of higher than or equal to 700 °C and lower than or equal to 850 °C. A second heating rate at temperatures higher than 680 °C and up to the maximum temperature may be, for example, more than or equal to 0.1 °C/min and less than or equal to 3.5 °C/min. Further, the holding time of the maximum temperature reached may be more than or equal to 1 hour and less than or equal to 10 hours. Furthermore, this firing process may be a multi-stage firing process, and each of the first heating rate and the second heating rate may be provided as a plurality of heating rates for separate temperature ranges, so long as those heating rates are within the above-specified ranges. For example, by using reduced heating rates, dispersion of Ca and Sr can be promoted, and the values of $I_{Ca\_OUT}/I_{Ca\_IN}$ and $I_{Sr\_OUT}/I_{Sr\_IN}$ can be increased.

The produced lithium transition metal composite oxide may subsequently be washed with water and dried. The washing with water and drying can be carried out using known methods and conditions. The Ca raw material, the Sr raw material, or the Me raw material may be added to a cake-like composition obtained after washing with water. When the Ca raw material and the Sr raw material are added to the cake-like composition, the normalized Ca intensity and the normalized Sr intensity can be made higher than when the Ca raw material and the Sr raw material are added to the metal oxide.

[Negative Electrode]

The negative electrode 12 comprises, for example, a negative electrode current collector and a negative electrode mixture layer formed on a surface of the negative electrode current collector. The negative electrode mixture layer is preferably formed on both sides of the negative electrode current collector. As the negative electrode current collector, it is possible to use a foil of a metal such as copper or a copper alloy which is stable in the potential range of the negative electrode 12, a film having such a metal disposed on its surface layer, or the like. The thickness of the negative electrode current collector is, for example, greater than or equal to 5 µm and less than or equal to 30 µm. The negative electrode mixture layer contains, for example, a negative electrode active material and a binder. The thickness of the negative electrode mixture layer is, for example, greater than or equal to 10 µm and less than or equal to 150 µm on one side of the negative electrode current collector. The negative electrode 12 can be produced, for example, by applying a negative electrode mixture slurry containing the negative electrode active material, the binder, and the like onto the surfaces of the negative electrode current collector, and, after drying the applied coating, rolling the coating to form negative electrode mixture layers on both sides of the negative electrode current collector.

No particular limitation is imposed on the negative electrode active material contained in the negative electrode mixture layer so long as it can reversibly occlude and release lithium ions, and a carbon material such as graphite is generally used therefor. The graphite may be either natural graphite such as flake graphite, massive graphite, and earthy graphite, or artificial graphite such as massive artificial graphite and graphitized mesophase carbon microbeads. Further, as the negative electrode active material, a metal that forms an alloy with Li such as Si and Sn, a metal compound containing Si, Sn, or the like, a lithium-titanium composite oxide, and the like may be used, and these materials having a carbon coating provided thereon may also be used. For example, in combination with graphite, it is possible to use a Si-containing compound represented by $SiO_x$ (where $0.5 \leq x \leq 1.6$), a Si-containing compound in which fine particles of Si are dispersed in a lithium silicate phase represented by $Li_{2y}SiO_{(2+y)}$ (where $0 < y < 2$), or the like.

Examples of the binder contained in the negative electrode mixture layer include styrene-butadiene rubber (SBR), nitrile-butadiene rubber (NBR), carboxymethyl cellulose (CMC) or a salt thereof, polyacrylic acid (PAA) or a salt thereof (which may be PAA-Na, PAA-K, or the like, or a partially neutralized salt), and polyvinyl alcohol (PVA). A single type among these may be used alone, or two or more types may be used in combination.

[Separator]

As the separator 13, for example, a porous sheet having ion permeability and insulation property is used. Specific examples of the porous sheet include a microporous thin film, woven fabric, and non-woven fabric. As the material of the separator, polyolefins such as polyethylene and polypropylene, cellulose, and the like are suitable. The separator 13 may have a single-layer structure or a laminated structure. Further, on the surface of the separator 13, there may be provided a highly heat-resistant resin layer made of aramid resin or the like, or a filler layer containing an inorganic compound filler.

[Non-Aqueous Electrolyte]

The non-aqueous electrolyte contains, for example, a non-aqueous solvent and an electrolyte salt dissolved in the non-aqueous solvent. As the non-aqueous solvent, it is possible to use, for example, esters, ethers, nitriles such as acetonitrile, amides such as dimethylformamide, a mixed solvent containing two or more of the foregoing, and the like. The non-aqueous solvent may contain a halogen-substituted product obtained by substituting at least part of hydrogen atoms in the above solvents with halogen atoms such as fluorine. Examples of the halogen-substituted product include fluorinated cyclic carbonate esters such as fluoroethylene carbonate (FEC), fluorinated chain carbonate esters, and fluorinated chain carboxylate esters such as methyl fluoropropionate (FMP).

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate (EP).

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (where $1 < x < 6$, and n is 1 or 2), $LiB_{10}Cl_{10}$, LiCl, LiBr, LiI, chloroborane lithium, lower aliphatic lithium carboxylate, borate salts such as $Li_2B_4O_7$ and $Li(B(C_2O_4)F_2)$, and imide salts such as $LiN(SO_2CF_3)_2$ and $LiN(C_lF_{2l+1}SO_2)(C_mF_{2m+1}SO_2)$ (where each of l and m is an integer of 0 or greater). As the lithium salt, a single type among these may be used alone, or a plurality of types may be mixed and used. Among the foregoing, it is preferable to use $LiPF_6$ from the perspective of ion conductivity, electrochemical stability, and the like. The concentration of the lithium salt is, for example, more than or equal to 0.5 mol and less than or equal to 2 mol per 1 liter of the non-aqueous solvent. Further, vinylene carbonate, a propane sultone based additive, and the like may be added.

EXAMPLES

While the present disclosure will now be further described using Examples and Comparative Examples, the present disclosure is not limited to the Examples below.

<Example 1-1>

[Production of Positive Electrode Active Material]

A composite hydroxide represented by $[Ni_{0.90}Co_{0.05}Al_{0.05}](OH)_2$ and obtained by a co-precipitation method was fired at 500 °C for 8 hours, and a metal oxide $(Ni_{0.90}Co_{0.05}Al_{0.05}O_2)$ was obtained. Next, $Ca(OH)_2$ and $Sr(OH)_2$ were added to this metal oxide so that the molar ratio of Ca was 1.20 mol% and the molar ratio of Sr was 0.15 mol% based on the total amount of Ni, Co, and Al. Further, lithium hydroxide monohydrate $(LiOH \cdot H_2O)$ was mixed in so that the molar ratio of Li to the total amount of Ni, Co, Al, Ca, and Sr was 103 mol%, and a mixture was obtained. This mixture was fired in an oxygen stream having an oxygen concentration of 95% (with a flow rate of 5 L/min per 1 kg of the mixture) at a first heating rate of 2 °C/min from room temperature to 650 °C, and subsequently at a second heating rate of 1 °C/min from 650 °C to 720 °C, and a lithium transition metal composite oxide was obtained. This lithium transition metal composite oxide was washed with water and dried, and a positive electrode active material of Example 1-1 was obtained.

The positive electrode active material was measured using an inductively coupled plasma atomic emission spectrometer (ICP-AES), and as a result, elements listed in Table 1 shown below, which correspond to elements other than Li and O, were confirmed to be present. Element concentration distribution in a cross section of the positive electrode active material was measured by time-of-flight secondary ion mass spectrometry (TOF-SIMS), and as a result, the normalized intensity ratio of Ca ($I_{Ca\_OUT}/I_{Ca\_IN}$) was 5.4, and the normalized intensity ratio of Sr ($I_{Sr\_OUT}/I_{Sr\_IN}$) was 7.6. The porosity of the lithium transition metal composite oxide was 1.8 %. The ratio of metal elements other than Li present in the Li layer was 2.0 mol% based on the total number of moles of metal elements other than Li in the lithium transition metal composite oxide.

[Production of Positive Electrode]

A positive electrode mixture slurry was prepared by mixing together 95 parts by mass of the above positive electrode active material, 3 parts by mass of acetylene black (AB), and 2 parts by mass of polyvinylidene fluoride (PVDF), and further adding thereto an appropriate amount of N-methyl-2-pyrrolidone (NMP). Next, the positive electrode mixture slurry was applied onto both sides of a positive electrode current collector made of aluminum foil having a thickness of 15 μm, and the applied coating was dried. After that, the coating was rolled using a roller, the resulting product was cut into a predetermined electrode size, and a positive electrode was thereby produced. In a part of the positive electrode, there was provided an exposed portion where a surface of the positive electrode current collector was exposed.

[Production of Negative Electrode]

Natural graphite was used as the negative electrode active material. A negative electrode mixture slurry was prepared by mixing the negative electrode active material, sodium carboxymethyl cellulose (CMC-Na), and styrene-butadiene rubber (SBR) in a solids mass ratio of 100: 1: 1 in an aqueous solution. Next, the negative electrode mixture slurry was applied onto both sides of a negative electrode current collector made of copper foil, and the applied coating was dried. After that, the coating was rolled using a roller, the resulting product was cut into a predetermined electrode size, and a negative electrode was thereby produced. In a part of the negative electrode, there was provided an exposed portion where a surface of the negative electrode current collector was exposed.

[Preparation of Non-Aqueous Electrolyte]

Ethylene carbonate (EC), methyl ethyl carbonate (MEC), and dimethyl carbonate (DMC) were mixed together in a volume ratio of 3:3:4. Into this mixed solvent, lithium hexafluorophosphate $(LiPF_6)$ was dissolved to a concentration of 1.2 mol/L, and a non-aqueous electrolyte was thereby prepared.

[Production of Test Cell]

A positive electrode lead was attached to the exposed portion of the positive electrode, and a negative electrode lead was attached to the exposed portion of the negative electrode. The positive electrode and the negative electrode were wound in a spiral shape with an interposed separator made of polyolefin, and the resulting product was shaped by being pressed in a radial direction to produce a flat-shaped spiral-type electrode assembly. This electrode assembly was housed in an outer casing composed of an aluminum laminate sheet, and after injecting the above-described non-aqueous electrolyte therein, the opening of the outer casing was sealed to obtain a test cell.

[Evaluation of Storage Characteristic]

In an ambient temperature of 25 °C, the test cell was charged at a constant current of 0.3 C until reaching 4.2 V, and then charged at a constant voltage of 4.2 V until reaching 0.02 C. Further, the test cell was discharged at a constant current of 0.5 C until reaching 2.5 V, and the initial discharge capacity was measured. Next, in an ambient temperature of 25 °C, the test cell was charged at a constant current of 0.3 C until reaching 4.2 V, then charged at a constant voltage of 4.2 V until reaching 0.02 C, and subsequently maintained at a temperature of 55 °C for 45 days. After that, in an ambient temperature of 25 °C, the test cell was discharged at a constant current of 0.5 C until reaching 2.5 V, again charged at a constant current of 0.3 C until reaching 4.2 V, and then charged at a constant voltage of 4.2 V until reaching 0.02 C. Next, the test cell was discharged at a constant current of 0.5 C until reaching 2.5 V, and the discharge capacity after storage was measured. The storage characteristic was calculated by the following formula.

$$\text{Storage characteristic} = \text{Discharge capacity after storage} / \text{Initial discharge capacity}$$

<Examples 1-2 to 1-3, and 1-6>

A test cell was produced and evaluated in the same manner as in Example 1-1 except that, in the production of the positive electrode active material, the amounts of $Ca(OH)_2$ and $Sr(OH)_2$ added were changed so that the molar ratios of Ca and Sr to the total amount of Ni, Co, and Al were equal to the values shown in Table 1.

<Example 1-4>

A test cell was produced and evaluated in the same manner as in Example 1-1 except that, in the production of the positive electrode active material, the amounts of $Ca(OH)_2$ and $Sr(OH)_2$ added were changed so that the molar ratio of Ca was 0.30 mol% and the molar ratio of Sr was 0.10 mol% based on the total amount of Ni, Co, and Al, and $CaCl_2$ was added to the cake-like composition obtained after washing with water so that 0.40 mol% Ca based on the total amount of Ni, Co, and Al was added.

<Example 1-5>

A test cell was produced and evaluated in the same manner as in Example 1-1 except that, in the production of the positive electrode active material, the amounts of $Ca(OH)_2$ and $Sr(OH)_2$ added were changed so that the molar ratio of Ca was 0.30 mol% and the molar ratio of Sr was 0.10 mol% based on the total amount of Ni, Co, and Al, and $SrCl_2$ was added to the cake-like composition obtained after washing with water so that 0.40 mol% Sr based on the total amount of Ni, Co, and Al was added.

<Comparative Examples 1-1 to 1-3>

A test cell was produced and evaluated in the same manner as in Example 1-1 except that, in the production of the positive electrode active material, the amounts of $Ca(OH)_2$ and $Sr(OH)_2$ added were changed so that the molar ratios of Ca and Sr to the total amount of Ni, Co, and Al were equal to the values shown in Table 1, the first heating rate was changed to 5 °C/min, and the second heating rate was changed to 3 °C/min.

<Example 2-1>

A test cell was produced and evaluated in the same manner as in Example 1-1 except that, in the production of the positive electrode active material, the composition of the metal oxide was changed to $Ni_{0.93}Al_{0.04}Mn_{0.03}$, and $Ca(OH)_2$ and $Sr(OH)_2$ were added so that the molar ratio of Ca was 0.60 mol% and the molar ratio of Sr was 0.20 mol% based on the total amount of Ni, Al, and Mn.

<Examples 2-2 to 2-4>

A test cell was produced and evaluated in the same manner as in Example 2-1 except that, in the production of the positive electrode active material, the mixture was prepared by further adding $ZrO_2$, $TiO_2$, or $Nb_2O_5$ so that the molar ratio of Zr, Ti, or Nb to the total amount of Ni, Al, and Mn was equal to the value shown in Table 2.

<Comparative Examples 2-1 to 2-3>

A test cell was produced and evaluated in the same manner as in Example 2-1 except that, in the production of the positive electrode active material, the amounts of $Ca(OH)_2$ and $Sr(OH)_2$ added were changed so that the molar ratios of Ca and Sr to the total amount of Ni, Co, and Al were equal to the values shown in Table 2, the first heating rate was changed to 5 °C/min, and the second heating rate was changed to 3 °C/min.

<Example 3-1>

A test cell was produced and evaluated in the same manner as in Example 1-1 except that, in the production of the positive electrode active material, the composition of the metal oxide was changed to $Ni_{0.90}Co_{0.04}Mn_{0.06}$, and $Ca(OH)_2$ and $Sr(OH)_2$ were added so that the molar ratio of Ca was 0.80 mol% and the molar ratio of Sr was 0.30 mol% based on the total amount of Ni, Co, and Mn.

<Examples 3-2 to 3-8>

A test cell was produced and evaluated in the same manner as in Example 3-1 except that, in the production of the positive electrode active material, the mixture was prepared by further adding $Nb_2O_5$, $ZrO_2$, $WO_3$, $TiO_2$, or $SiO_2$ so that the molar ratio of Nb, Zr, W, Ti, or Si to the total amount of Ni, Co, and Mn was equal to the value shown in Table 3.

<Comparative Examples 3-1 to 3-2>

A test cell was produced and evaluated in the same manner as in Example 3-1 except that, in the production of the positive electrode active material, the amounts of $Ca(OH)_2$ and $Sr(OH)_2$ added were changed so that the molar ratios of Ca and Sr to the total amount of Ni, Co, and Al were equal to the values shown in Table 3, the first heating rate was changed to 5 °C/min, and the second heating rate was changed to 3 °C/min.

<Example 4-1>

A test cell was produced and evaluated in the same manner as in Example 1-1 except that, in the production of the positive electrode active material, the composition of the metal oxide was changed to $Ni_{0.90}Mn_{0.10}$, and $Ca(OH)_2$ and $Sr(OH)_2$ were added so that the molar ratio of Ca was 1.00 mol% and the molar ratio of Sr was 0.80 mol% based on the total amount of Ni and Mn.

<Examples 4-2 to 4-6>

A test cell was produced and evaluated in the same manner as in Example 4-1 except that, in the production of the positive electrode active material, the mixture was prepared by further adding $Nb_2O_5$, $ZrO_2$, $WO_3$, $TiO_2$, or $SiO_2$ so that the molar ratio of Nb, Zr, W, Ti, or Si to the total amount of Ni and Mn was equal to the value shown in Table 4.

<Comparative Examples 4-1 to 4-2>

A test cell was produced and evaluated in the same manner as in Example 4-1 except that, in the production of the positive electrode active material, the amounts of $Ca(OH)_2$ and $Sr(OH)_2$ added were changed so that the molar ratios of Ca and Sr to the total amount of Ni, Co, and Al were equal to the values shown in Table 4, the first heating rate was changed to 5 °C/min, and the second heating rate was changed to 3 °C/min.

The evaluation results of the test cells of the Examples and Comparative Examples are shown in separate groups in Tables 1 to 4. Each of Tables 1 to 4 also shows the composition of the metal oxide and the ratios of the additives used in preparing the positive electrode active material, the normalized intensity ratios of Ca and Sr, the ratio of metal elements other than Li in the Li layer, and the porosity of the positive electrode active material. In Table 1, the storage characteristics of the test cells other than that of Comparative Example 1-1 are expressed relative to the storage characteristic of the test cell of Comparative Example 1-1, which is assumed to be 100. In Table 2, the storage characteristics of the test cells other than that of Comparative Example 2-1 are expressed relative to the storage characteristic of the test cell of Comparative Example 2-1, which is assumed to be 100. In Table 3, the storage characteristics of the test cells other than that of Comparative Example 3-1 are expressed relative to the storage characteristic of the test cell of Comparative Example 3-1, which is assumed to be 100. In Table 4, the storage characteristics of the test cells other than that of Comparative Example 4-1 are expressed relative to the storage characteristic of the test cell of Comparative Example 4-1, which is assumed to be 100.

[Table 1]

| | Metal oxide [mol%] | | | | Additives [mol%] | | | Normalized intensity ratios | | Porosity [%] | Ratio of metal elements other than Li in Li layer [%] | Storage characteristic |
|---|---|---|---|---|---|---|---|---|---|---|---|---|
| | Ni | Co | Al | Mn | M2 | Ca | Sr | Ca | Sr | | | |
| Example 1-1 | 90 | 5 | 5 | 0 | - | 1.20 | 0.15 | 5.4 | 7.6 | 1.8 | 2.0 | 109 |
| Example 1-2 | 90 | 5 | 5 | 0 | - | 2.00 | 0.10 | 8.3 | 4.8 | 2.2 | 1.6 | 112 |
| Example 1-3 | 90 | 5 | 5 | 0 | - | 0.25 | 1.00 | 2.9 | 8.2 | 1.2 | 1.8 | 104 |
| Example 1-4 | 90 | 5 | 5 | 0 | - | 0.70 | 0.10 | 14.2 | 5.0 | 1.2 | 2.4 | 110 |
| Example 1-5 | 90 | 5 | 5 | 0 | - | 0.30 | 0.50 | 2.2 | 13.0 | 1.6 | 2.1 | 107 |
| Example 1-6 | 90 | 5 | 5 | 0 | - | 1.00 | 0.50 | 7.5 | 8.9 | 5.3 | 2.1 | 101 |
| Comparative Example 1-1 | 90 | 5 | 5 | 0 | - | 0.80 | 0.30 | 2.1 | 4.3 | 3.8 | 1.6 | 100 |
| Comparative Example 1-2 | 90 | 5 | 5 | 0 | - | 0.80 | 0 | 1.4 | - | 2.2 | 1.8 | 95 |
| Comparative Example 1-3 | 90 | 5 | 5 | 0 | - | 0 | 0.30 | - | 1.1 | 1.9 | 1.9 | 75 |

[Table 2]

| | Metal oxide [mol%] | | | | Additives [mol%] | | | Normalized intensity ratios | | Porosity [%] | Ratio of metal elements other than Li in Li layer [%] | Storage characteristic |
|---|---|---|---|---|---|---|---|---|---|---|---|---|
| | Ni | Co | Al | Mn | M2 | Ca | Sr | Ca | Sr | | | |
| Example 2-1 | 93 | 0 | 4 | 3 | - | 0.60 | 0.20 | 5.4 | 7.6 | 0.8 | 3.4 | 109 |
| Example 2-2 | 93 | 0 | 4 | 3 | Zr 0.1 | 0.60 | 0.20 | 6.0 | 7.2 | 1.1 | 3.7 | 108 |
| Example 2-3 | 93 | 0 | 4 | 3 | Ti 0.1 | 0.60 | 0.20 | 3.8 | 7.6 | 2.0 | 2.9 | 109 |
| Example 2-4 | 93 | 0 | 4 | 3 | Nb 0.1 | 0.60 | 0.20 | 4.7 | 8.1 | 1.6 | 3.2 | 105 |
| Comparative Example 2-1 | 93 | 0 | 4 | 3 | - | 0.60 | 0.20 | 2.3 | 4.2 | 3.5 | 3.4 | 100 |
| Comparative Example 2-2 | 93 | 0 | 4 | 3 | - | 0.60 | 0 | 2.4 | - | 2.8 | 3.6 | 93 |
| Comparative Example 2-3 | 93 | 0 | 4 | 3 | - | 0 | 0.20 | - | 1.5 | 1.8 | 3.3 | 82 |

[Table 3]

| | Metal oxide [mol%] | | | | Additives [mol%] | | | Normalized intensity ratios | | Porosity [%] | Ratio of metal elements other than Li in Li layer [%] | Storage characteristic |
|---|---|---|---|---|---|---|---|---|---|---|---|---|
| | Ni | Co | Al | Mn | M2 | Ca | Sr | Ca | Sr | | | |
| Example 3-1 | 90 | 4 | 0 | 6 | - | 0.80 | 0.30 | 3.5 | 7.9 | 2.3 | 2.8 | 104 |
| Example 3-2 | 90 | 4 | 0 | 6 | Nb 0.5 | 0.80 | 0.30 | 2.9 | 7.4 | 2.5 | 3.5 | 108 |
| Example 3-3 | 90 | 4 | 0 | 6 | Zr 0.5 | 0.80 | 0.30 | 3.3 | 8.2 | 2.2 | 2.8 | 107 |
| Example 3-4 | 90 | 4 | 0 | 6 | W 0.5 | 0.80 | 0.30 | 4.1 | 7.1 | 2.9 | 3.1 | 109 |
| Example 3-5 | 90 | 4 | 0 | 6 | Ti 0.5 | 0.80 | 0.30 | 3.7 | 8.9 | 2.8 | 3.1 | 106 |
| Example 3-6 | 90 | 4 | 0 | 6 | Si 0.5 | 0.80 | 0.30 | 2.6 | 7.4 | 2.8 | 3.4 | 106 |
| Example 3-7 | 90 | 4 | 0 | 6 | Nb 0.5 Zr 0.5 | 0.80 | 0.30 | 5.4 | 7.6 | 1.9 | 3.2 | 109 |
| Example 3-8 | 90 | 4 | 0 | 6 | Nb 0.5 Ti 0.5 | 0.80 | 0.30 | 6.2 | 8.0 | 1.8 | 3.2 | 109 |
| Comparative Example 3-1 | 90 | 4 | 0 | 6 | - | 0.80 | 0.30 | 3.1 | 4.7 | 2.6 | 3.3 | 100 |
| Comparative Example 3-2 | 90 | 4 | 0 | 6 | - | 0.80 | 0 | 3.3 | - | 3.2 | 3.6 | 93 |

[Table 4]

| | Metal oxide [mol%] | | | | Additives [mol%] | | | Normalized intensity ratios | | Porosity [%] | Ratio of metal elements other than Li in Li layer [%] | Storage characteristic |
|---|---|---|---|---|---|---|---|---|---|---|---|---|
| | Ni | Co | Al | Mn | M2 | Ca | Sr | Ca | Sr | | | |
| Example 4-1 | 90 | 0 | 0 | 10 | - | 1.00 | 0.80 | 7.6 | 8.3 | 2.2 | 5.1 | 105 |
| Example 4-2 | 90 | 0 | 0 | 10 | Nb 0.5 | 1.00 | 0.80 | 7.2 | 7.9 | 1.9 | 4.9 | 107 |
| Example 4-3 | 90 | 0 | 0 | 10 | Zr 0.5 | 1.00 | 0.80 | 5.6 | 7.2 | 1.7 | 4.3 | 106 |
| Example 4-4 | 90 | 0 | 0 | 10 | W 0.5 | 1.00 | 0.80 | 5.4 | 7.6 | 1.1 | 5.6 | 107 |
| Example 4-5 | 90 | 0 | 0 | 10 | Ti 0.5 | 1.00 | 0.80 | 4.6 | 7.2 | 2.0 | 5.4 | 108 |
| Example 4-6 | 90 | 0 | 0 | 10 | Si 0.5 | 1.00 | 0.80 | 3.3 | 8.2 | 1.8 | 5.0 | 110 |

(continued)

| | Metal oxide [mol%] | | | | Additives [mol%] | | | Normalized intensity ratios | | Porosity [%] | Ratio of metal elements other than Li in Li layer [%] | Storage characteristic |
|---|---|---|---|---|---|---|---|---|---|---|---|---|
| | Ni | Co | Al | Mn | M2 | Ca | Sr | Ca | Sr | | | |
| Comparative Example 4-1 | 90 | 0 | 0 | 10 | - | 1.00 | 0.80 | 5.5 | 5.6 | 4.1 | 5.4 | 100 |
| Comparative Example 4-2 | 90 | 0 | 0 | 10 | - | 1.00 | 0 | 2.4 | - | 2.7 | 6.7 | 96 |

In Tables 1 to 4, the test cells of the Examples have higher storage characteristics than the test cells of the Comparative Examples. Accordingly, it can be seen that the storage characteristic of a non-aqueous electrolyte secondary battery is improved by including, in the positive electrode active material, a lithium transition metal composite oxide in which at least one of the normalized intensity ratio of Ca ($I_{Ca\_OUT}/I_{Ca\_IN}$) and the normalized intensity ratio of Sr ($I_{Sr\_OUT}/I_{Sr\_IN}$) is greater than or equal to 7 and less than or equal to 20.

The present disclosure is further described by the following embodiments.

Configuration 1:

A positive electrode active material for non-aqueous electrolyte secondary battery, including a lithium transition metal composite oxide, wherein

the lithium transition metal composite oxide contains Ni, Ca, and Sr, and includes secondary particles formed by aggregation of primary particles,
in an element concentration distribution in a cross section of the lithium transition metal composite oxide as determined using time-of-flight secondary ion mass spectrometry, at least one of a ratio $I_{Ca\_OUT}/I_{Ca\_IN}$ of a normalized intensity $I_{Ca\_OUT}$ of Ca at a surface of the secondary particles to a normalized intensity $I_{Ca\_IN}$ of Ca in an interior of the secondary particles and a ratio $I_{Sr\_OUT}/I_{Sr\_IN}$ of a normalized intensity $I_{Sr\_OUT}$ of Sr at the surface of the secondary particles to a normalized intensity $I_{Sr\_IN}$ of Sr in the interior of the secondary particles is greater than or equal to 7 and less than or equal to 20.

Configuration 2:

The positive electrode active material for non-aqueous electrolyte secondary battery according to Configuration 1, wherein a content of Ni in the lithium transition metal composite oxide is greater than or equal to 80 mol% based on a total number of moles of metal elements other than Li in the lithium transition metal composite oxide.

Configuration 3:

The positive electrode active material for non-aqueous electrolyte secondary battery according to Configuration 1 or 2, wherein

the lithium transition metal composite oxide has a layered structure, and
a ratio of metal elements other than Li present in a Li layer of the layered structure is less than or equal to 8 mol% based on a total number of moles of metal elements other than Li in the lithium transition metal composite oxide.

Configuration 4:

The positive electrode active material for non-aqueous electrolyte secondary battery according to any one of Configurations 1 to 3, wherein the lithium transition metal composite oxide further contains one or more elements selected from the group consisting of Co, Al, and Mn.

Configuration 5:

The positive electrode active material for non-aqueous electrolyte secondary battery according to any one of Configurations 1 to 4, wherein the lithium transition metal composite oxide further contains one or more elements selected from the group consisting of Nb, Ti, Zr, W, and Si.

Configuration 6:

The positive electrode active material for non-aqueous electrolyte secondary battery according to any one of Configurations 1 to 5, wherein a porosity of the lithium transition metal composite oxide is less than or equal to 5 %.

Configuration 7:

A non-aqueous electrolyte secondary battery, comprising a positive electrode including the positive electrode active material for non-aqueous electrolyte secondary battery according to any one of Configurations 1 to 6, a negative electrode, and a non-aqueous electrolyte.

REFERENCE SIGNS LIST

10 secondary battery; 11 positive electrode; 12 negative electrode; 13 separator; 14 electrode assembly; 16 outer casing; 17 sealing assembly; 18, 19 insulation plate; 20 positive electrode lead; 21 negative electrode lead; 22 grooved portion; 23 internal terminal plate; 24 lower vent member; 25 insulation member; 26 upper vent member; 27 cap; 28 gasket; 30 secondary particle; 32a, 32b, 32c, 32d void; 34 dent.

**Claims**

1. A positive electrode active material for non-aqueous electrolyte secondary battery, including a lithium transition metal composite oxide, wherein

   the lithium transition metal composite oxide contains Ni, Ca, and Sr, and includes secondary particles formed by aggregation of primary particles,
   in an element concentration distribution in a cross section of the lithium transition metal composite oxide as determined using time-of-flight secondary ion mass spectrometry, at least one of a ratio $I_{Ca\_OUT}/I_{Ca\_IN}$ of a normalized intensity $I_{Ca\_OUT}$ of Ca at a surface of the secondary particles to a normalized intensity $I_{Ca\_IN}$ of Ca in an interior of the secondary particles and a ratio $I_{Sr\_OUT}/I_{Sr\_IN}$ of a normalized intensity $I_{Sr\_OUT}$ of Sr at the surface of the secondary particles to a normalized intensity $I_{Sr\_IN}$ of Sr in the interior of the secondary particles is greater than or equal to 7 and less than or equal to 20.

2. The positive electrode active material for non-aqueous electrolyte secondary battery according to claim 1, wherein a content of Ni in the lithium transition metal composite oxide is greater than or equal to 80 mol% based on a total number of moles of metal elements other than Li in the lithium transition metal composite oxide.

3. The positive electrode active material for non-aqueous electrolyte secondary battery according to claim 1, wherein

   the lithium transition metal composite oxide has a layered structure, and
   a ratio of metal elements other than Li present in a Li layer of the layered structure is less than or equal to 8 mol% based on a total number of moles of metal elements other than Li in the lithium transition metal composite oxide.

4. The positive electrode active material for non-aqueous electrolyte secondary battery according to claim 1, wherein the lithium transition metal composite oxide further contains one or more elements selected from the group consisting of Co, Al, and Mn.

5. The positive electrode active material for non-aqueous electrolyte secondary battery according to claim 1, wherein the lithium transition metal composite oxide further contains one or more elements selected from the group consisting of Nb, Ti, Zr, W, and Si.

6. The positive electrode active material for non-aqueous electrolyte secondary battery according to claim 1, wherein a porosity of the lithium transition metal composite oxide is less than or equal to 5 %.

7. A non-aqueous electrolyte secondary battery, comprising a positive electrode including the positive electrode active material for non-aqueous electrolyte secondary battery according to any one of claims 1 to 6, a negative electrode, and a non-aqueous electrolyte.

Figure 1

Figure 2

<table>
<tr><td colspan="2" align="center">**INTERNATIONAL SEARCH REPORT**</td><td colspan="2">International application No.<br><br>**PCT/JP2023/022227**</td></tr>
</table>

**A.     CLASSIFICATION OF SUBJECT MATTER**

     *H01M 4/525*(2010.01)i; *C01G 53/00*(2006.01)i; *H01M 4/505*(2010.01)i
     FI:   H01M4/525; C01G53/00 A; H01M4/505

According to International Patent Classification (IPC) or to both national classification and IPC

**B.     FIELDS SEARCHED**

Minimum documentation searched (classification system followed by classification symbols)

     H01M4/525; C01G53/00; H01M4/505

Documentation searched other than minimum documentation to the extent that such documents are included in the fields searched

     Published examined utility model applications of Japan 1922-1996
     Published unexamined utility model applications of Japan 1971-2023
     Registered utility model specifications of Japan 1996-2023
     Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | WO 2021/106324 A1 (PANASONIC INTELLECTUAL PROPERTY MANAGEMENT CO., LTD.) 03 June 2021 (2021-06-03)<br>    claims, paragraphs [0022], [0024], [0055], [0073] | 1-5, 7 |
| Y | | 6 |
| Y | WO 2022/130982 A1 (PANASONIC INTELLECTUAL PROPERTY MANAGEMENT CO., LTD.) 23 June 2022 (2022-06-23)<br>    claims, paragraph [0041] | 6 |
| A | WO 2022/092182 A1 (PANASONIC INTELLECTUAL PROPERTY MANAGEMENT CO., LTD.) 05 May 2022 (2022-05-05)<br>    claims, paragraph [0075] | 1-7 |
| A | JP 2006-351378 A (MATSUSHITA ELECTRIC IND. CO., LTD.) 28 December 2006 (2006-12-28)<br>    claims | 1-7 |

☐ Further documents are listed in the continuation of Box C.    ☑ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **17 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

Information on patent family members

International application No.

**PCT/JP2023/022227**

| Patent document cited in search report | | | Publication date (day/month/year) | Patent family member(s) | | | Publication date (day/month/year) |
|---|---|---|---|---|---|---|---|
| WO | 2021/106324 | A1 | 03 June 2021 | US | 2023/0032577 | A1 | |
| | | | | claims, paragraphs [0022], [0024], [0064], table 1 | | | |
| | | | | EP | 4067310 | A1 | |
| | | | | CN | 114762150 | A | |
| WO | 2022/130982 | A1 | 23 June 2022 | (Family: none) | | | |
| WO | 2022/092182 | A1 | 05 May 2022 | (Family: none) | | | |
| JP | 2006-351378 | A | 28 December 2006 | US | 2009/0081548 | A1 | |
| | | | | claims | | | |
| | | | | CN | 101199065 | A | |
| | | | | KR | 10-2008-0015034 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6226430 B